# EUROPÄISCHE PATENTANMELDUNG

(11) **EP 3 396 203 A1**
(43) Veröffentlichungstag der Anmeldung: **31.10.2018**
(21) Anmeldenummer: 17168380.8
(22) Anmeldetag: 27.04.2017
(51) Int. Cl.: F16H 1/46, F16H 57/021, F16H 57/031, F03D 15/00

(54) **GETRIEBE**

(71) Anmelder: Siemens Aktiengesellschaft, 80333 München (DE)
(72) Erfinder: Barthel, Thomas, 46459 Rees (DE); Böing, Alfons, 46499 Hamminkeln (DE); Kortz, Stephan, 46145 Oberhausen (DE)

(57) **Zusammenfassung**

Die Erfindung betrifft ein Getriebe (10) für eine Windkraftanlage (70). Das Getriebe (10) weist eine abtriebsseitige Planetengetriebestufe mit einer ein schrägverzahntes Sonnenrad (11) tragenden Sonnenradwelle (1), eine Kupplungswelle (3) und eine in einem Wälzlager (7) gelagerte, als Hohlwelle ausgestaltete Verbindungswelle (2) auf. Die Sonnenradwelle (1) ist an ihrem abtriebsseitigen Endabschnitt von der Verbindungswelle (2) konzentrisch umgeben und mit dieser drehfest verbunden (12). Die Kupplungswelle (3) ist an ihrem antriebsseitigen Endabschnitt von der Verbindungswelle (2) konzentrisch umgeben und mit dieser drehfest verbunden (23). Das Wälzlager (7) ist ein Lager in O-Anordnung (71, 72).

## Beschreibung

Die vorliegende Erfindung betrifft ein Getriebe eines Triebstrangs einer WKA (= Windkraftanlage) zur Umwandlung von kinetischer Windenergie in elektrische Energie mittels eines Getriebes und eines Generators.

Es sind WKA mit einem schnell-drehenden Triebstrang bekannt, welcher ein Getriebe mit zwei Planetenstufen und einer nachgeschalteten Stirnradstufe umfasst. Eine derartige WKA ist z.B. in EP2199607A2 (Winergy AG) 23.06.2010 beschrieben. Im Falle einer Schrägverzahnung der Planetenstufen wirkt auf die Sonnenwelle der zweiten Planetenstufe eine Axialkraft, die in der Regel von einer Hohlwelle der nachgeschalteten Stirnradstufe abgefangen wird.

Andererseits sind WKA mit einem mittelschnell-drehenden Triebstrang bekannt, bei denen das Getriebe nur zwei Planetenstufen aufweist. Da in diesem Fall eine Hohlwelle einer nachgeschalteten Stirnradstufe fehlt, muss eine durch eine Schrägverzahnung der Planetenstufen hervorgerufene Axialkraft der Sonnenwelle andernorts abgefangen werden.

EP2573386A1 (Siemens AG) 27.03.2013 beschreibt einen Triebstrang einer mittelschnell-drehenden WKA zur Umwandlung von kinetischer Windenergie in elektrische Energie mittels eines Getriebes und eines Generators. Eine im Betrieb auf eine Getriebeausgangswelle wirkende Axialkraft, hervorgerufen durch eine Schrägverzahnung des zweistufigen Planetengetriebes, wird über ein doppelreihiges Lager in X-Anordnung, geeignet zur Aufnahme von Radial- und Axialkräften, abgefangen.

EP2339176A2 (General Electric Co.) 29.06.2011 beschreibt, wie die oben genannte EP2573386A1, einen Triebstrang einer mittelschnell-drehenden WKA. Das schrägverzahnte zweistufige Planetengetriebe übt auf eine das Getriebe und den Generator verbindende Welle eine Axialkraft in Richtung zum Generator aus. Der Rotor oder der Stator des Generators ist mit einer Schrägwicklung ausgeführt ("skewed"), so dass er auf die Welle eine entgegen gerichtete Axialkraft ausübt. Die Überlagerung dieser beiden entgegen gerichteten Axialkräfte führt zu deren zumindest teilweisen Kompensation und somit zu einer signifikanten Reduktion des Betrags der resultierenden Axialkraft, die auf ein Lager der Welle wirkt. Durch die reduzierte Belastung des Lagers verlängert sich seine Lebensdauer.

Es ist Aufgabe der Erfindung, ein verbessertes Getriebe bereitzustellen.

Diese Aufgabe wird erfindungsgemäß durch ein Getriebe mit den in Anspruch 1 angegebenen Merkmalen gelöst. Die Erfindung betrifft ein Getriebe für eine WKA. Das Getriebe ist Teil eines Triebstrangs der WKA zur Umwandlung von kinetischer Windenergie in elektrische Energie mittels des Getriebes und eines Generators. Das Getriebe weist eine antriebsseitige Eingangswelle und eine abtriebsseitige Ausgangswelle, welche entsprechend der Übersetzung des Getriebes schneller als die Eingangsgwelle rotiert, auf. Die Antriebsseite des Getriebes ist zu einem Windrotor der WKA gerichtet, die Abtriebsseite des Getriebes ist von dem Windrotor abgewandt und dem Generator zugewandt. Das Getriebe weist eine abtriebsseitige Planetengetriebestufe mit einer ein schrägverzahntes Sonnenrad tragenden Sonnenradwelle auf. Das schrägverzahnte Sonnenrad, welches mit korrespondierend schrägverzahnten Planetenrädern kämmt, kann dabei einstückig mit der Sonnenradwelle ausgebildet oder durch eine drehfeste Vebindung, z.B. eine kraftschlüssige Schrumpfverbindung, auf der Sonnenradwelle angeordnet sein. Die Sonnenradwelle kann als eine Hohlwelle oder als eine massive Welle ausgestaltet sein. Das Getriebe weist außerdem eine Kupplungswelle auf, welche als eine Hohlwelle oder als eine massive Welle ausgestaltet sein kann. Das Getriebe weist darüber hinaus eine in einem Wälzlager gelagerte, als Hohlwelle ausgestaltete Verbindungswelle auf. Dabei ist die Sonnenradwelle an ihrem abtriebsseitigen Endabschnitt von der Verbindungswelle konzentrisch umgeben und mit dieser drehfest verbunden. Außerdem ist die Kupplungswelle an ihrem antriebsseitigen Endabschnitt von der Verbindungswelle konzentrisch umgeben und mit dieser drehfest verbunden. Das Wälzlager zur Lagerung der Verbindungswelle ist ein Lager in O-Anordnung.

Bei einem Lager in O-Anordnung handelt es sich um eine angestellte Lagerung; dabei nimmt bei wechselnder Lastrichtung der Axialkraft abwechselnd das rechte und das linke Lager die Axialkraft auf. Axialbelastungen werden also in beide Richtungen, aber jeweils nur von einem Lager bzw. Lagersatz aufgenommen. Vorteilhaft ist bei dieser Lagerung, dass bei einer Anordnung von zwei einreihigen Schräglagern axiale Kräfte in beiden Richtungen aufgenommen werden können. Zudem kann das Lagerspiel eingestellt werden. Lager in O-Anordnung ergeben eine relativ starre Lagerung. Dank des großen Abstands zwischen den wirksamen Lagermitten eignet sich diese Anordnung besonders gut zur Aufnahme von Momentbelastungen.

Die drehfesten Verbindungen zwischen der Verbindungswelle und der Sonnenradwelle und der Kupplungswelle können mittels Kurzverzahnungen ausgebildet sein; dabei weisen die Sonnenradwelle und die Kupplungswelle an ihren abtriebs- bzw. antriebsseitigen Endabschnitten jeweils eine umlaufende Außenverzahnung und die Verbindungswelle an ihren beiden Endabschnitten jeweils eine umlaufende Innenverzahnung auf, die zu den Außenverzahnungen von Sonnenradwelle und Kupplungswelle korrespondiert. Von Vorteil ist dabei, dass die Wellen sich relativ zueinander verlagern können und somit Verspannungen vermieden werden.

Das erfindungsgemäße Getriebe dient als ein WKA-Hauptgetriebe, d.h. als dasjenige Getriebe in einer WKA, welches dazu verwendet wird, die Drehzahl eines meist dreiblättrigen Windrotors, je nach herrschender Windstärke z.B. im Bereich von 10 bis 20 Umdrehungen pro Minute, in eine höhere Drehzahl, z.B. im Bereich von 300 bis 500 Umdrehungen pro Minute, zum Antreiben eines Generators zu übersetzen.

Das Getriebe weist eine abtriebsseitige Planetengetriebestufe auf, d.h. die Sonnenradwelle der abtriebsseitigen Planetengetriebestufe ist die Abtriebswelle des Getriebes. Dabei kann das Getriebe außerdem eine antriebsseitige Planetengetriebestufe aufweisen, welche der abtriebsseitigen Planetengetriebestufe in Bezug auf die Drehmomentdurchleitung durch den WKA-Triebsstrang vorgeschaltet ist.

Vorteilhafte Ausgestaltungen und Weiterbildungen der Erfindung sind in den abhängigen Ansprüchen angegeben.

Gemäß einer bevorzugten Ausgestaltung der Erfindung ragt die Kupplungswelle abtriebsseitig aus einem Getriebegehäuse des Getriebes und ist in diesem Bereich von einem am Getriebegehäuse montierten Lagerdeckel umgeben. Der Lagerdeckel weist eine Durchgangsöffnung zum Duchtritt der Kupplungswelle auf. Dabei ist der kleinste Durchmesser der vorzugsweise kreisrunden Durchgangsöffnung größer als der Durchmesser des Kopfkreises einer antriebsseitigen Kurzverzahnung der Kupplungswelle. Mittels der antriebsseitigen Kurzverzahnung steht die Kupplungswelle mit einer entsprechend ausgebildeten abtriebsseitigen Kurzverzahnung der Verbindungswelle in Zahneingriff. Durch dieses Größenverhältnis ist sichergestellt, dass die Kupplungswelle, welche an ihrem antriebsseitigen Ende die Kurzverzahnung trägt, durch die Durchgangsöffnung des Lagerdeckels geschoben werden kann. Somit kann die Kupplungswelle als letztes Teil in das fertig montierte Getriebe eingeschoben werden, z.B. um bei einem Endkunden eine Drehverbindung zwischen dem Getriebe und einem dem Getriebe nachgeschalteten Generator herzustellen. Somit ist eine einfache und beschädigungsfreie Montage des Generators an das Getriebe und der Drehmomentverbindung zwischen Generator und Getriebe gewährleistet.

Gemäß einer bevorzugten Ausgestaltung der Erfindung weist das Getriebe antriebsseitig eine erste Planetengetriebestufe und abtriebsseitig eine der ersten Planetengetriebestufe nachgeschaltete zweite Planetengetriebestufe auf. Dabei ist die WKA-Rotorwelle, d.h. die Windrotorwelle, mit einem Planetenträger der ersten Stufe, welcher somit die Antriebswelle des Getriebes bildet, und eine Sonnenradwelle der ersten Stufe mit einem Planetenträger der zweiten Stufe drehfest verbunden. Die Sonnenradwelle der zweiten Stufe, welche somit die Abtriebswelle des Getriebes bildet, ist mit einer Rotorwelle des Generators, d.h. der Generator-Welle, drehfest verbunden.

Gemäß einer bevorzugten Ausgestaltung der Erfindung ist das Wälzlager in einem Getriebegehäuse des Getriebes angeordnet. Das Getriebegehäuse umfasst Bauelemente des Getriebes, die gegenüber den rotierenden Bauelementen wie Räder und Wellen nicht rotieren. Das Getriebegehäuse kann bei einem zweistufigen Planetengetriebe ein antriebsseitiges Gehäuseteil, an dem ein erstes Lager des Planetenträgers der ersten Stufe angeordnet ist, ein mittleres Gehäuseteil, an dem ein zweites Lager des Planetenträgers der ersten Stufe und ein erstes Lager des Planetenträgers der zweiten Stufe angeordnet ist, und ein abtriebsseitiges Gehäuseteil, an dem ein zweites Lager des Planetenträgers der zweiten Stufe angeordnet ist, umfassen, wobei zwischen dem antriebsseitige und dem mittleren Gehäuseteil ein Hohlrad der ersten Planetengetriebestufe und zwischen dem mittleren und dem abtriebsseitigen Gehäuseteil ein Hohlrad der zweiten Planetengetriebestufe angeordnet und mit diesen verschraubt sein kann.

Das Wälzlager zur Lagerung der Verbindungswelle kann in einem Lagersitz des Getriebegehäuses angeordnet sein, welcher in einem abtriebsseitigen Gehäuseteil oder in einem damit verbundenen Gehäuseflansch ausgebildet ist.

Ein Wälzlager ist ein Lager, bei dem zwischen einem Innenring und einem Außenring angeordnete rollende Körper den Reibungswiderstand bei einer drehenden Bewegung verringern. Wälzlager werden im Wesentlichen in Kugellager und Rollenlager unterschieden. Gemäß einer bevorzugten Ausgestaltung der Erfindung ist das Wälzlager als ein Kegelrollenlager ausgebildet. Der Vorteil dabei ist, dass radial und axial wirkende Belastungen aufgenommen werden können.

Gemäß einer bevorzugten Ausgestaltung der Erfindung ist in einem Abschnitt der Sonnenradwelle eine durch eine Durchmesserverringerung gebildete Anlagekante ausgebildet. Dieser Abschnitt mit der Anlagekante liegt axial zwischen der drehfesten Verbindung der Sonnenradwelle mit der Verbindungswelle und einer abtriebsseitigen Stirnseite der Sonnenradwelle, d.h. dem zur Kupplungswelle hin liegenden Ende der Sonnenradwelle. Die Anlagekante liegt an einem am Innenumfang der Verbindungswelle angeordneten Vorsprung an. Der Vorsprung springt zur Mittenachse der Verbindungswelle hin über den antriebsseitigen Innenumfang der Verbindungswelle vor. Der Vorsprung kann als eine am Innenumfang der Verbindungswelle umlaufende Schulter oder ein Ring ausgestaltet sein. Der Vorsprung kann aus dem Material der Verbindungswelle herausgearbeitet sein, z. B. durch einen Spanprozess, d.h. einstückig mit der Verbindungswelle geformt sein. Er kann aber auch durch ein separates Bauteil gebildet sein, welches mit der Verbindungswelle verbunden ist, z.B. ein eingeschweißter und/oder eingeschrumpfter Ring. Der Vorteil des Anliegens der Anlagekante an dem Vorsprung ist, dass die Sonnenradwelle, welche von einer durch die Schrägverzahnung des Sonnenrads hervorgerufenen, von der Antriebsseite zu der Abtriebsseite des Getriebes gerichteten Axialkraft zur Kupplungswelle hin gedrückt wird, an einem die axiale Bewegung begrenzenden Anschlag anliegt und somit nicht weiter zur Kupplungswelle hin verschoben werden kann. Die oben erwähnte Axialkraft wird somit von der Sonnenradwelle auf die Verbindungswelle und von der Verbindungswelle auf das Wälzlager abgeleitet, wobei das Wälzlager die Kraft in das Getriebegehäuse ableitet.

Gemäß einer bevorzugten Ausgestaltung der Erfindung weist die Sonnenradwelle eine umlaufende Nut mit einem darin eingesetzten Sicherungsring auf. Der Sicherungsring begrenzt dabei eine axiale Entfernung des Vorsprungs von der Anlagekante. Die Nut liegt also in einem Abschnitt der Sonnenradwelle, welcher axial zwischen dem am Innenumfang der Verbindungswelle angeordneten Vorsprung und einer abtriebsseitigen Stirnseite der Sonnenradwelle liegt. Der Vorteil dabei ist, dass durch den Sicherungsring eine axiale Bewegung der Sonnenradwelle in Richtung zu dem Windrotor, welche im Falle eines Reversierbetriebes des Triebsstrangs auftritt, begrenzt wird.

Gemäß einer bevorzugten Ausgestaltung der Erfindung ist eine gegen die Verbindungswelle abdichtende Wellendichtung in einem Lagerdeckel des Getriebegehäuses angeordnet. Das hat den Vorteil, das keine störenden Stoffe wie Staub aus der Umgebung in das Getriebeinnere und kein Schmieröl aus dem Getriebeinneren in die Umgebung gelangen können.

Der Grund dafür, dass eine im Lagerdeckel sitzende Dichtung das Innere des Getriebes gegen die Verbindungswelle, nicht aber gegen die Kupplungswelle abdichtet, ist, dass der kleinste Innendurchmesser der im Lagerdeckel angeordneten axial-mittigen Öffnung größer als der Kopfkreis der Kurzverzahnung der Kupplungswelle sein muss, damit die Kupplungswelle als nahezu letztes Teil bei der Triebstangmontage beim Endkunden montiert und die Kurzverzahnung der Kupplungswelle mit der generatorseitigen Innenverzahnung der Verbindungwelle in Eingriff gebracht werden kann. Somit ist eine einfache und beschädigungsfreie Montage des Generators an das Getriebe und eine Drehmomentverbindung zwischen Generator und Getriebe gewährleistet. Bei herkömmlichen Lösungen muss die Laufverzahnung der Sonne, insbesondere problematisch bei Schrägverzahnungen, beim Kunden in die Zahneingriffe der Planeten in der Planetenstufe eingefädelt werden, was ein hohes Beschädigungsrisiko mit sich bringt.

Die Tatsache, dass der Lagerdeckel nicht gegen die Kupplungswelle abdichtet, sondern gegen die Verbindungswelle, hat hinsichtlich von Ölverlusten aus dem Getriebe keine Bedeutung, weil die geringe Menge Öl, die so in den Generatorraum fließen kann, dort nicht schädlich ist. Andererseits ergibt sich dadurch der Vorteil, dass das Getriebe und der Generator denselben Ölraum, denselben Öltank und dieselbe Ölanlage nutzen können.

Eine bevorzugte Ausgestaltung der Erfindung ist eine Antriebsanordnung für eine Windkraftanlage, welche ein Getriebe gemäß einer der oben beschriebenen Ausgestaltungen aufweist. Die Antriebsanordnung weist außerdem eine mit dem Getriebe verbundene Generatoreinheit auf, welche einen Stator und einen auf einer drehbar gelagerten Generator-Rotorwelle angeordneten Rotor aufweist. Dabei ist die Kupplungswelle mit der Generator-Rotorwelle drehfest verbunden.

Gemäß einer bevorzugten Ausgestaltung der Antriebsanordnung ist die Generator-Rotorwelle in einem Gehäuse der Generatoreinheit eigenständig gelagert. Der Vorteil dabei ist, dass die Lagerung der Generator-Rotorwelle unabhängig von dem Getriebe ist und somit das Getriebe mit unabhängig davon gefertigten Generatoren verbunden werden kann. Die Wahl des Generators kann also weitgehend unabhängig vom Getriebe erfolgen; es steht somit eine große Zahl von auf dem Markt erhältlichen Generatoren zur Verfügung.

Gemäß einer bevorzugten Ausgestaltung der Antriebsanordnung ist die Rotorwelle in mindestens zwei axial voneinander beabstandeten Lagern gelagert. Die Generator-Rotorwelle ist in einem Gehäuse der Generatoreinheit also eigenständig gelagert.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- FIG 1: eine Schrägansicht einer Antriebsanordnung einer WKA;
- FIG 2: einen Längsschnitt durch ein Getriebe für einen mittelschnell laufenden Generator;
- FIG 3: ein vergrößertes Detail von FIG 2;
- FIG 4: einen Schnitt durch ein Wälzlager in O-Anordnung;
- FIG 5: einen Längsschnitt durch einen Generator; und
- FIG 6: eine Draufsicht auf die Abtriebsseite des Getriebegehäuses entlang der Mittelachse des Getriebes.

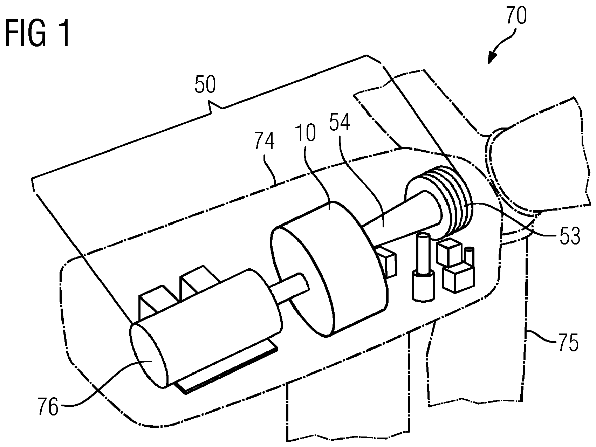

In FIG 1 ist schematisch der Aufbau einer Windkraftanlage 70 dargestellt, die eine auf einem Turm um eine vertikale Achse drehbar angeordnete Gondel 74 aufweist, an der ein dreiflügeliger Windrotor 75 angebracht ist. Der Windrotor 75 ist über eine WKA-Rotorwelle 54 mit einem Getriebe 10 drehmomentübertragend verbunden. Die WKA-Rotorwelle 54 bildet zusammen mit dem Getriebe 10, einem Generator 76 und einem WKA-Rotorwellenlager 53 Komponenten eines Triebsstrang 50 der Windkraftanlage 70. Das Getriebe 10 ist dabei drehmomentübertragend mit dem Generator 76 verbunden, durch den Elektrizität gewonnen wird.

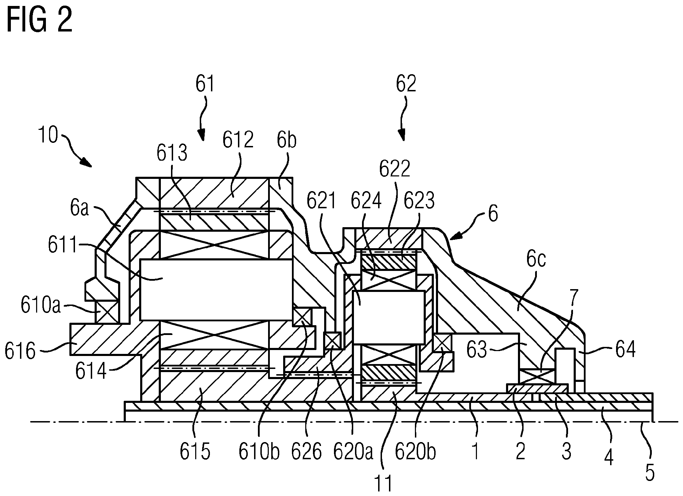

FIG 2 zeigt einen Längsschnitt einer Hälfte, bezogen auf eine Mittelachse 5, des in FIG 1 dargestellten Getriebes 10. Das Getriebe 10 umfasst ein Getriebegehäuse 6, in dem eine erste Getriebestufe 61 und eine zweite Getriebestufe 62, in dieser Reihenfolge hintereinander geschaltet in Richtung von dem Windrotor 75 zu dem Generator 76, angeordnet sind. Das Getriebegehäuse 6 weist ein antriebsseitiges Gehäuseteil 6a, ein mittleres Gehäuseteil 6b und ein abtriebsseitiges Gehäuseteil 6c auf. In FIG 2 ist die Antriebsseite des Getriebes 10 der linke Endabschnitt und die Abtriebsseite des Getriebes 10 der rechte Endabschnitt des Getriebes 10.

Die erste Getriebestufe 61 ist als eine erste Planetenstufe ausgestaltet und wird von der mit dem Windrotor 75 verbundenen WKA-Rotorwelle 54 angetrieben. Die erste Getriebestufe 61 des Getriebes 10 umfasst einen ersten Planetenträger 616, der mit der WKA-Rotorwelle 54 Drehmoment übertragend verbunden ist. Der erste Planetenträger 616 ist in dem Getriebegehäuse 6 in ersten Wälzlagern 610a, 610b drehbar gelagert und besteht aus zwei parallelen Seitenwangen, die durch nicht gezeigte Stege miteinander verbunden sind.

In dem ersten Planetenträger 616 sind mehrere erste Planetenräder 613 drehbar in ersten Planetenradlagern 614 gelagert. Die ersten Planetenradlager 614, die als vorzugsweise zwei-oder mehrreihige Wälzlager ausgebildet und in den ersten Planetenrädern 613 angeordnet sind, stützen sich je Planetenrad 613 über eine erste Planetenachse 611 auf dem ersten Planetenträger 616 ab. Die ersten Planetenräder 613 stehen einerseits mit einem fest zwischen dem antriebsseitigen Gehäuseteil 6a und dem mittleren Gehäuseteil 6b angeordneten ersten Hohlrad 612 und anderseits mit einem zentral angeordneten ersten Sonnenrad 615 in Eingriff. Das erste Sonnenrad 615 ist drehfest mit einer ersten Sonnenradwelle verbunden, welche mittels einer Zahnkupplung mit einem zweiten Planetenträger 626 einer als Planetenstufe ausgestalteten zweiten Getriebestufe 62 rotatorisch gekoppelt ist.

Die zweite Getriebestufe 62 umfasst ein zweites Sonnenrad 11, das mit mehreren zweiten Planetenrädern 623 in Eingriff steht, die ihrerseits in ein fest zwischen dem mittleren Gehäuseteil 6b und dem abtriebsseitigen Gehäuseteil 6c angeordnetes zweites Hohlrad 622 eingreifen. Die zweiten Planetenräder 623 sind über zweite Planetenradlager 624 in dem zweiten Planetenträger 626 gelagert und stützen sich jeweils über eine zweite Planetenachse 621 in dem zweiten Planetenträger 626 ab. Der zweite Planetenträger 626 ist in dem Getriebegehäuse 6 in zweiten Wälzlagern 620a, 620b drehbar gelagert und besteht aus zwei parallelen Seitenwangen, die durch nicht gezeigte Stege miteinander verbunden sind.

Das zweite Sonnenrad 11 ist drehfest auf einer Sonnenradwelle 1 angeordnet, welche durch eine als Hohlwelle ausgestaltete Verbindungswelle 2 drehfest mit einer Kupplungswelle 3 verbunden ist. Dazu weist die Verbindungswelle 2 an ihren beiden Endabschnitten Innenverzahnungen auf, welche in jeweils korrespondierende Außenverzahnungen der Sonnenradwelle 1 und der Kupplungswelle 3 eingreifen. Dabei ist die Verbindungswelle 2 in einem in einem Lagerflansch 63 des abtriebsseitigen Gehäuseteils 6c sitzendem Lager 7 gelagert. Darüber hinaus weist der abtriebsseitige Gehäuseteil 6c einen Lagerdeckel 64 auf, in dem eine die Verbindungswelle 3 abdichtende Wellendichtung sitzt.

Entlang der Mittelachse 5 des Getriebes 10 verläuft ein sogenanntes Pitchrohr 4 axial durch das gesamte Getriebe 10. Das Pitchrohr 4 dient als Kanal zur Durchführung von Versorgungsleitungen vom generatorseitigen Ende des Getriebes 10 zur Nabe des Windrotors 75.

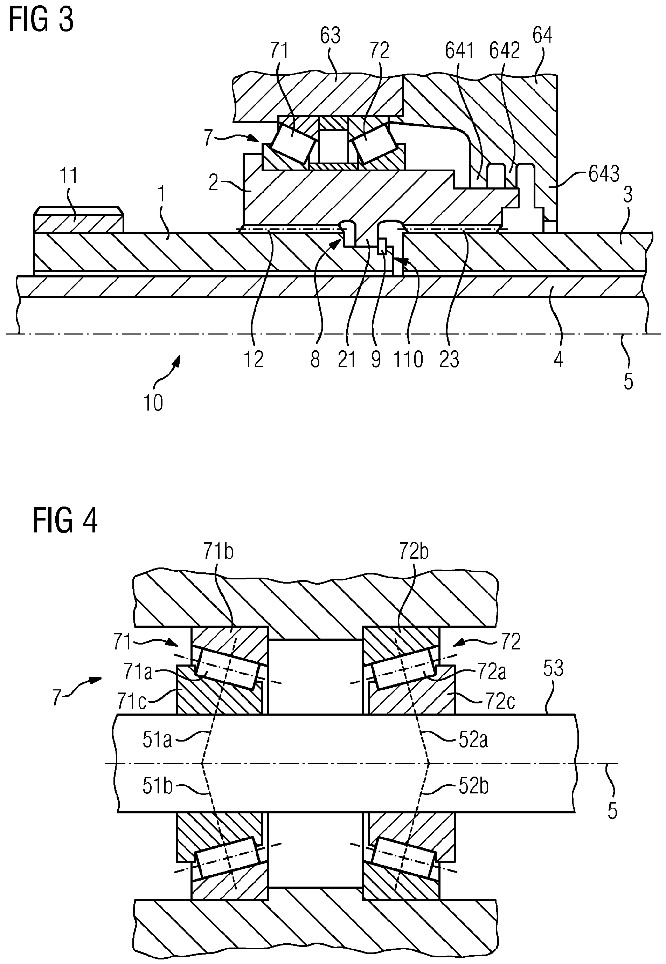

FIG 3 zeigt ein vergrößertes Detail von FIG 2, nämlich den Bereich um die Verbindungswelle 2. Das von der Sonnenradwelle 1 getragene Sonnenrad 11 der abtriebsseitigen Planetengetriebestufe 62 ist schrägverzahnt. Die Sonnenradwelle 1 ist an ihrem abtriebsseitigen Endabschnitt von der Verbindungswelle 2 konzentrisch umgeben und mit dieser über einen Zahneingriff 12 drehfest verbunden. In ähnlicher Weise ist die Kupplungswelle 3 an ihrem antriebsseitigen Endabschnitt von der Verbindungswelle 2 konzentrisch umgeben und mit dieser über einen Zahneingriff 23 drehfest verbunden 23. Das die Verbindungswelle 2 abstützende Wälzlager 7 ist ein Lager in 0-Anordnung, d.h. eine angestellte Lagerung mit zwei Lagersätzen 71, 72.

Dabei ist das als ein Kegelrollenlager ausgestaltete Wälzlager 7 in einem Lagerflansch 63 des Getriebegehäuses 6 angeordnet. An dem Lagerflansch 63 ist ein ringförmiger Lagerdeckel 64 montiert, der das Pitchrohr 4 und die das Pitchrohr umgebende Kupplungswelle 3 radial umgibt. An seinem Innenumfang weist der Lagerdeckel 64 drei Ringe auf: einen zum Windrotor 75 hin liegenden inneren Ring 641, einen zum Generator 76 hin liegenden äußeren Ring 643 und einen zwischen dem inneren 641 und dem äußeren Ring 643 angeordneten mittleren Ring 642. Der innere 641 und der mittlere 642 Ring weisen jeweils an ihrem zur Verbindungswelle 2 gerichteten Innenumfang eine Labyrinthdichtung gegen die Verbindungswelle 2 auf. Der äußere Ring 643 weist einen Innendurchmesser von einer solchen Größe auf, dass der Kopfkreis der für den Zahneingriff 23 vorgesehenen Kurzverzahnung der Kupplungswelle 3 durch die axial-mittige Öffnung des äußeren Ring 643 hindurch geführt werden kann. Auf diese Weise kann die Kupplungswelle 3 nach der Montage des Lagerdeckels 64 von der Generatorseite her durch die Öffnung des äußeren Rings 643 in den Zahneingriff 23 eingesteckt werden.

In einem Abschnitt der Sonnenradwelle 1, welcher axial zwischen der drehfesten Verbindung 12 der Sonnenradwelle 1 mit der Verbindungswelle 2 und einer abtriebsseitigen Stirnseite 110 der Sonnenradwelle 1 liegt, ist eine durch eine Durchmesserverringerung gebildete Anlagekante 8 ausgebildet, welche an einem am Innenumfang der Verbindungswelle 2 angeordneten Vorsprung 21, welcher als ein an den Innenumfang angesetzter Ring ausgestaltet ist, anliegt.

Die Sonnenradwelle 1 weist eine umlaufende Nut mit einem darin eingesetzten Sicherungsring 9, z.B. in Form eines Nutenrings, welcher eine axiale Entfernung des Vorsprungs 21 von der Anlagekante 8 begrenzt. Der Sicherungsring begrenzt also eine axiale Bewegung der Sonnenradwelle in Richtung zu dem Windrotor, welche im Falle eines Reversierbetriebes des Triebsstrangs auftritt.

FIG 4 veranschaulicht das Wälzlager 7 in O-Anordnung. Das Lager 7 umfasst einen ersten, als einreihiges Schräglager ausgestalteten Lagersatz 71 und einen zweiten, als einreihiges Schräglager ausgestalteten Lagersatz 72. Der erste Lagersatz 71 weist einen Innenring 71c, einen Außenring 71b und dazwischen angeordnete, als Kegelrollen ausgestaltete Wälzkörper 71a auf. Der zweite Lagersatz 72 weist einen Innenring 72c, einen Außenring 72b und dazwischen angeordnete, als Kegelrollen ausgestaltete Wälzkörper 72a auf.

Durch jeden Wälzkörper 71a, 72a läuft jeweils eine Berührungslinie 51a, 51b, 52a, 52b, die sich von der Lagerachse 5 durch die Symmetrieachse des Wälzkörpers 71a, 72a erstreckt. Bei Lagern in O-Anordnung laufen die Berührungslinien 51a, 51b, 52a, 52b entlang der Lagerachse 5 auseinander: von links entlang der Lagerachse 5 kommend, laufen die beiden Berührungslinien 51a, 51b des linken Lagersatzes 71 auseinander; von rechts entlang der Lagerachse 5 kommend, laufen die beiden Berührungslinien 52a, 52b des rechten Lagersatzes 72 auseinander.

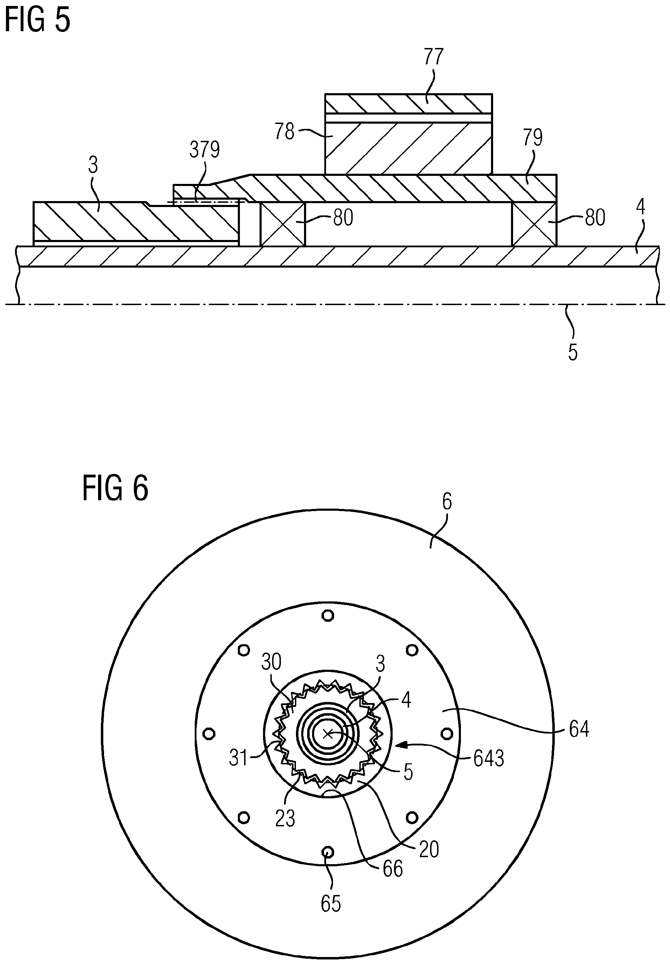

FIG 5 zeigt einen Längsschnitt des in FIG 1 dargestellten Generators 76. Die Generatoreinheit 76 weist in bekannter Bauart innerhalb eines nicht gezeigten Generatorgehäuses einen Stator 77 und einen auf einer drehbar gelagerten Generator-Rotorwelle 79 angeordneten Generator-Rotor 78 auf. Dabei ist de Generator-Rotorwelle 79 mit der in den Figuren 2 und 3 dargestellten Kupplungswelle 3 drehfest verbunden. Die Generator-Rotorwelle 79 ist in dem nicht gezeigten Gehäuse der Generatoreinheit 76 eigenständig in zwei axial voneinander beabstandeten Lagern 80 gelagert.

FIG 6 zeigt eine Draufsicht auf die Abtriebsseite des Getriebegehäuses 6 entlang der Mittelachse 5 des Getriebes 10. Ein Lagerdeckel 64 ist mittels Schraubbolzen 65 an der Abtriebsseite des Getriebegehäuses 6 montiert. Der riungförmige Lagerdeckel 64 weist eine von seinem äußeren Ring 643 begrenzte Durchgangsöffnung 66 auf, durch welche das Pitchrohr 4 und die Kupplungswelle 3 aus dem Inneren des Getriebes 10 abtriebsseitig nach Außen ragen. Dabei ist der kleinste Durchmesser der vorzugsweise kreisrunden Durchgangsöffnung 66 größer als der Durchmesser des Kopfkreises 31 der antriebsseitigen Kurzverzahnung 30 der Kupplungswelle 3, welche mit einer entsprechend ausgebildeten abtriebsseitigen Kurzverzahnung 20 der Verbindungswelle 2 in Zahneingriff 23 steht. Durch dieses Größenverhältnis ist sichergestellt, dass die Kupplungswelle 3, welche an ihrem antriebsseitigen Ende die Kurzverzahnung 30 trägt, durch die Durchgangsöffnung 66 des Lagerdeckels 64 geschoben werden kann. Somit kann die Kupplungswelle 3 als letztes Teil in das fertig montierte Getriebe eingeschoben werden, z.B. um bei einem Endkunden eine Drehverbindung zwischen dem Getriebe und einem dem Getriebe nachgeschalteten Generator herzustellen.

## Patentansprüche

1. Getriebe (10) für eine Windkraftanlage (70), aufweisend
- eine abtriebsseitige Planetengetriebestufe mit einer ein schrägverzahntes Sonnenrad (11) tragenden Sonnenradwelle (1),
- eine der Sonnenradwelle (1) abtriebsseitig nachgeschaltete Kupplungswelle (3), und
- eine in einem Wälzlager (7) gelagerte, als Hohlwelle ausgestaltete Verbindungswelle (2),
wobei die Sonnenradwelle (1) an ihrem abtriebsseitigen Endabschnitt von der Verbindungswelle (2) konzentrisch umgeben und mit dieser drehfest verbunden (12) ist, und
wobei die Kupplungswelle (3) an ihrem antriebsseitigen Endabschnitt von der Verbindungswelle (2) konzentrisch umgeben und mit dieser drehfest verbunden (23) ist,
**dadurch gekennzeichnet, dass**
das Wälzlager (7) ein Lager in O-Anordnung (71, 72) ist.

2. Getriebe (10) nach Anspruch 1,
wobei die Kupplungswelle (3) abtriebsseitig aus einem Getriebegehäuse (6) des Getriebes (10) ragt und in diesem Bereich von einem am Getriebegehäuse (6) montierten Lagerdeckel (64) umgeben ist, welcher eine Durchgangsöffnung (66) zum Duchtritt der Kupplungswelle (3) aufweist,
wobei der kleinste Durchmesser der vorzugsweise kreisrunden Durchgangsöffnung (66) größer als der Durchmesser eines Kopfkreises (31) einer antriebsseitigen Kurzverzahnung (30) der Kupplungswelle (3) ist, durch welche die Kupplungswelle (3) mit einer entsprechend ausgebildeten abtriebsseitigen Kurzverzahnung (20) der Verbindungswelle (2) in Zahneingriff (23) steht.

3. Getriebe (10) nach Anspruch 1 oder 2, wobei das Wälzlager (7) in einem Getriebegehäuse (6) des Getriebes (10) angeordnet ist.

4. Getriebe (10) nach einem der vorhergehenden Ansprüche, wobei das Wälzlager (7) als ein Kegelrollenlager ausgestaltet ist.

5. Getriebe (10) nach einem der vorhergehenden Ansprüche, wobei in einem Abschnitt der Sonnenradwelle (1), welcher axial zwischen der drehfesten Verbindung (12) der Sonnenradwelle (1) mit der Verbindungswelle (2) und einer abtriebsseitigen Stirnseite der Sonnenradwelle (1) liegt, eine durch eine Durchmesserverringerung gebildete Anlagekante (8) ausgebildet ist, welche an einem am Innenumfang der Verbindungswelle (2) angeformten Vorsprung (21) anliegt.

6. Getriebe (10) nach Anspruch 5, wobei die Sonnenradwelle (1) eine umlaufende Nut mit einem darin eingesetzten Sicherungsring (9) aufweist, welcher eine axiale Entfernung des Vorsprungs (21) von der Anlagekante (8) begrenzt.

7. Antriebsanordnung (50) für eine Windkraftanlage (70) mit
- einem Getriebe (10) nach einem der vorhergehenden Ansprüche, und
- einer mit dem Getriebe (10) verbundenen Generatoreinheit (76), welche einen Stator (77) und einen auf einer drehbar gelagerten Generator-Rotorwelle (79) angeordneten Rotor (78) aufweist,
wobei die Kupplungswelle (3) mit der Generator-Rotorwelle (79) drehfest verbunden ist.

8. Antriebsanordnung (50) nach Anspruch 7,
wobei die Generator-Rotorwelle (79) in einem Gehäuse der Generatoreinheit (76) eigenständig gelagert (80) ist.

9. Antriebsanordnung (50) nach Anspruch 8,
wobei die Generator-Rotorwelle (79) in mindestens zwei axial voneinander beabstandeten Lagern (80) gelagert ist.
